# EUROPÄISCHE PATENTSCHRIFT

(11) **EP 2 104 215 B1**
(45) Veröffentlichungstag und Bekanntmachung des Hinweises auf die Patenterteilung: **05.09.2018**
(21) Anmeldenummer: 08004956.2
(22) Anmeldetag: 17.03.2008
(51) Int. Cl.: H02M 1/00, H02M 3/335

(54) **PRIMÄRSEITIGE STEUERSCHALTUNG IN EINEM SCHALTNETZTEIL MIT TRANSFORMATOR OHNE HILFSWICKLUNG**
CONTROL CIRCUIT ON THE PRIMARY SIDE OF AN ELECTRONIC POWER CONVERTER HAVING A TRANSFORMER WITHOUT AUXILIARY WINDING
CIRCUIT DE COMMANDE PRIMAIRE POUR UN CONVERTISSEUR ÉLECTRONIQUE DE PUISSANCE COMPORTANT UN TRANSFORMATEUR SANS ENROULEMENT AUXILIAIRE

(43) Veröffentlichungstag der Anmeldung: 23.09.2009
(73) Patentinhaber: Power Systems Technologies GmbH, 48346 Ostbevern (DE)
(72) Erfinder: Schröder, Ralf, 49219 Glandorf (DE)
(74) Vertreter: Grünecker Patent- und Rechtsanwälte PartG mbB

(56) Entgegenhaltungen:
- EP-A- 1 528 651
- EP-A- 1 737 113
- DE-A1- 1 591 669
- DE-A1- 4 244 530
- DE-A1- 10 211 229
- US-A- 6 094 087
- US-B1- 6 233 165

## Beschreibung

Die vorliegende Erfindung bezieht sich auf eine Steuerschaltung für ein primär gesteuertes Schaltnetzteil, das einen primärseitigen Schalter und einen Übertrager aufweist. Die vorliegende Erfindung bezieht sich außerdem auf ein zugehöriges Schaltnetzteil.

Üblicherweise verwenden bekannte Schaltnetzteile einen Leistungstransistorschalter, um einen gepulsten Stromfluss an ein Netzwerk von induktiven und kapazitiven Energiespeicherelementen zu speisen, welche den geschalteten Strompuls in eine geregelte Gleichspannung umwandeln. Schaltnetzteile können Ausgangsspannungen liefern, die größer, kleiner, gleich oder von entgegengesetzter Polarität wie die ungeregelte Eingangsspannung sind, je nach dem Betriebsmodus des Schaltnetzteils. Häufig werden Schaltnetzteile in Leistungsversorgungsschaltungen eingesetzt. Dabei sollten derartige Schaltnetzteile Eingangsspannungen im Bereich von 85 V Wechselspannung bis 270 V Wechselspannung akzeptieren und auf diese Weise bei unterschiedlichen Netzversorgungen überall auf der Welt ohne Modifikationen oder Schalter arbeiten können. Darüber hinaus muss die Ausgangsspannung ausreichend und genau geregelt werden, um Schäden an der Last einerseits und unnötigen Leistungsverbrauch andererseits zu vermeiden. Schließlich müssen heutige Schaltnetzteile extrem kostengünstig und von ihren geometrischen Abmessungen her weitestgehend minimiert ausgeführt werden.

Die Ausgangsspannung bekannter Schaltnetzteile wird üblicherweise mittels eines Rückkopplungssignals geregelt, das die Ausgangsspannung und/oder den Ausgangsstrom abbildet. Dieses Rückkopplungssignal wird verwendet, um den Arbeitszyklus des schaltenden Leistungstransistors zu steuern. Um ein geeignetes Rückkopplungssignal bereitzustellen, existieren gegenwärtig verschiedene Ansätze. Beispielsweise kann eine primärseitige Hilfswicklung vorgesehen sein, die während der Ausschaltzeit des primärseitigen Schalters ein Rückkopplungssignal erzeugt, das ein Abbild der Ausgangsspannung liefert. Alternativ kann aber auch unmittelbar die Ausgangsspannung über einen Optokoppler zurückgekoppelt werden.

Die eingesetzte Regel- und Ansteuerschaltung benötigt eine stets gleichbleibende Versorgungsspannung, die im Folgenden auch als Betriebsspannung bezeichnet wird. Beispielsweise liegt die Betriebsspannung einer als anwenderspezifische integrierte Schaltung (Application Specific Integrated Circuit, ASIC) ausgeführten Steuerschaltung bei 3 V oder 5 V. Es ist bekannt, diese Versorgungsspannung aus der oben erwähnten primärseitigen Hilfswicklung bereitzustellen. Dies hat aber den Nachteil, dass auf die Hilfswicklung nicht verzichtet werden kann, selbst wenn man sie zum Bereitstellen des Rückkoppelsignals nicht benötigen würde, und dass somit der Transformator des Schaltnetzteils vergleichsweise komplex und teuer ist.

Die Druckschrift EP 1 737 113 A bezieht sich auf ein Schaltnetzteil, bei dem die Versorgungsspannung für den ASIC aus dem Strom erzeugt wird, der durch die zweite Hilfswicklung fließt und dem ASIC über den Anschluss VP zugeführt wird.

Die EP 1 528 651 A offenbart ein Ladegerät mit einem PWM-Steuerschaltkreis, bei dem der Strom, welcher durch das Schaltelement fließt, gemessen wird, und bei dem andererseits die Betriebsspannung dem PWM-Steuerschaltkreis über einen Widerstand direkt von einer Leistungsversorgungsschaltung zugeführt wird. Die Schaltung hat einen Begrenzeranschluss, der benützt wird, um den Strom zu begrenzen, der durch den Schalter fließt. Die Versorgungsspannung der Steuerschaltung ist aber unabhängig von dem Eingang, der an diesem Anschluss anliegt.

Die US 6,233,165 B1 bezieht sich auf einen Schaltwandler mit einem Übertrager und einem Schaltelement, das mit einer primärseitigen Wicklung des Übertragers verbunden ist. Die Leistungsversorgung zum Betreiben der Steuerschaltung wird von einem Knoten zwischen der primärseitigen Wicklung des Transformators und dem Schalter M1 abgegriffen.

Die DE 1 591 669 A1 bezieht sich auf eine Schaltungsanordnung zum Steuern des Leistungsschalters eines DC-DC-Wandlers. Die Schaltung gemäß dieser Druckschrift besitzt einen Steuergenerator, der seine Versorgungsspannung von der Eingangsspannung Ue erhält. Ein Spannungsteiler, der durch zwei Dioden und einen Widerstand gebildet ist, dient dazu, eine sperrende Vorspannung für die Basis des Steuergenerators gegenüber dem Emitter zu erzeugen. Außerdem wird die Versorgungsspannung über einen stabilisierten Spannungsteiler aus der Eingangsspannung erzeugt.

Aus der DE 102 11 229 A1 ist ein Spannungswandler bekannt, der einen Neutralpunkt einer primärseitigen Wicklung während des Startups von der Speisespannung abkoppelt und den Versorgungsstrom verwendet, um einen Oszillator mit Spannung zu versorgen. Weiterhin ist ein Schalter vorgesehen, der den Neutralpunkt der primärseitigen Wicklung von der Speisespannung trennen kann, um den Oszillatorschaltkreis während des Startups zu versorgen. Bei der Schaltung gemäß dieser Druckschrift ist es erforderlich, den nichtgeschalteten Knoten von der Speisespannung zu trennen, damit die Spannung zum Versorgen des Oszillatorkreises aus dem Eingangsstrom erzeugt werden kann.

Die DE 42 44 530 A1 offenbart ein Schaltnetzteil, das einen Versorgungsspannungsanschluss a hat. Dieser Versorgungsspannungsanschluss ist über einen Spannungsteiler mit einem Schutzeingang und über einen Transistor mit Masse verbunden. Der Eingang erlaubt eine Stromabschaltung abhängig von dem Strom. Um die Empfindlichkeit der Schutzschaltung anpassen zu können, wird der Schwellwert der Schutzschaltung während des Standby-Betriebs im Vergleich zum Normalbetrieb auf einen höheren Wert angehoben. Das bedeutet, dass die Schutzschaltung während des Standby-Modus schon bei einem geringeren Stromfluss durch den Schalttransistor aktiv wird.

Die US 6,094,087 A schließlich offenbart die Verwendung eines Kondensators zum Treiben eines Transistors im Falle eines Totem Pole-Treibers.

Die Aufgabe, die der vorliegenden Erfindung zugrunde liegt, besteht darin, eine Steuerschaltung für ein Schaltnetzteil anzugeben, die eine Verwendung mit möglichst einfach und kostengünstig aufgebauten Transformatoren erlaubt. Insbesondere soll auf die Verwendung einer Hilfswicklung verzichtet werden können.

Diese Aufgabe wird durch den Gegenstand des unabhängigen Patentanspruchs 1 gelöst. Vorteilhafte Weiterbildungen der vorliegenden Erfindung sind Gegenstand der abhängigen Patentansprüche.

Die vorliegende Erfindung basiert auf der Idee, dass die Steuerschaltung in Reihe zu dem Leistungsschalter des Schaltnetzteils geschaltet wird, und dass auf diese Weise der Primärstrom des Übertragers zur Stromversorgung der Steuerschaltung genutzt wird. Somit kann die üblicherweise zur Spannungsversorgung der Ansteuerschaltung erforderliche Hilfswicklung eliminiert werden und der Transformator des Schaltnetzteils wird stark vereinfacht.

Je nach Auslegung der Steuerschaltung und des Übertragers kann es sein, dass der primärseitige Strom, der durch die Primärseite des Übertragers fließt, zu hoch ist, um daraus die erforderliche Versorgungsspannung zu erzeugen. Deshalb kann gemäß einer vorteilhaften Ausführungsform der überschüssige Strom parallel zu der Steuerschaltung, beispielsweise mit einer Zenerdiode, abgeleitet werden.

Gemäß einer vorteilhaften Ausführungsform der vorliegenden Erfindung ist die Steuerschaltung zum großen Teil in einem anwenderspezifischen integrierten Schaltkreis (ASIC) integriert. In diesem Fall kann überschüssiger Strom auch mittels eines Schalters in dem ASIC abgeleitet werden. Beispielsweise wird ein Parallelzweig, der außerhalb des ASIC angeordnet ist und einen Widerstand enthält, parallel zur Betriebsspannung des ASIC geschaltet.

Der Schalter kann z. B. in Antwort auf einen gemessenen Wert der Betriebsspannung geschaltet werden, wenn ein Vergleich mit einem Schwellenwert ergibt, dass die Betriebsspannung oberhalb eines definierten Wertes liegt, z. B. 3 V oder 5 V. Auf diese Weise kann erreicht werden, dass mit einem preiswerten Bauelement, nämlich einem Widerstand, die Betriebsspannung der Steuerschaltung begrenzt werden kann. Darüber hinaus entsteht die Verlustleistung dann größtenteils nicht im ASIC, sondern im Widerstand, so dass die Temperaturerhöhung des ASIC in vorteilhafter Weise minimiert wird.

Da das höchste Potential an der Steuerschaltung meist niedriger ist als das zum Einschalten eines gebräuchlichen Halbleiterschalters erforderliche Potential, kann gemäß einer weiteren vorteilhaften Ausführungsform der Leistungsschalter über einen Kondensator eingeschaltet werden. Ein Anschluss dieses Kondensators kann dann über einen Widerstand an das Betriebsspannungspotential der Steuerschaltung angeschlossen werden, so dass beim Umschalten des Treiberausgangs der Steuerschaltung Spannungen oberhalb der Betriebsspannung der Steuerschaltung erreicht werden können. Damit kann der primärseitige Leistungsschalter ein- und ausgeschaltet werden, obwohl die eigentliche Betriebsspannung unter den erforderlichen Werten liegen würde.

Um die Ausgangsspannung und den Ausgangsstrom des Schaltnetzteils durch geregeltes Ansteuern des primärseitigen Schalters zu regeln, weist gemäß einer vorteilhaften Ausführungsform die erfindungsgemäße Schaltung weiterhin einen Rückkopplungssignaleingang zum Empfangen eines Rückkopplungssignals auf. Dieses Rückkopplungssignal bildet den Ausgangsstrom und/oder die Ausgangsspannung des Schaltnetzteils ab und die Steuerschaltung regelt entsprechend die Ein- und Ausschaltzeiten des primärseitigen Schalters. Um die erforderliche galvanische Trennung zwischen Primärseite und Sekundärseite sicherzustellen, kann der Rückkopplungssignaleingang beispielsweise über einen Optokoppler mit der Sekundärseite des Schaltnetzteils verbunden werden.

Um den Maximalstrom im Transformator begrenzen zu können, ist an der Steuerschaltung weiterhin ein Spitzenstromerkennungseingang vorgesehen, der zum Begrenzen des maximalen primärseitigen Stroms durch die Primärseite des Übertragers über einen zweiten Parallelzweig und den primärseitigen Schalter mit der Primärseite des Übertragers verbindbar ist. Es wird zwischen die Steuerschaltung und den Ausgang des Leistungsschalters, also den Emitter- bzw. den Sourceanschluss ein weiterer Widerstand geschaltet. Der Spannungsfall an diesem Widerstand kann dann über einen weiteren Widerstand der Steuerschaltung zugeführt werden. Anhand des Spannungsfalls kann der Zeitpunkt bestimmt werden, zu dem der Leistungsschalter ausgeschaltet werden muss.

Für den Start benötigt die Steuerschaltung einen geringen Strom. Dieser Strom kann vorteilhafterweise über einen Starterwiderstand aus der gleichgerichteten Eingangsspannung des Schaltnetzwerkes bereitgestellt werden.

Wird dieser Widerstand nicht direkt an die Betriebsspannung, sondern an den Anschluss zur Begrenzung des Maximalstromes, den Spitzenstromerkennungseingang, angeschlossen, kann durch geeignete Dimensionierung der Widerstände an diesem Anschluss die Variation des Schaltstroms, die durch die Abschaltverzögerung des Leistungsschalters bei Variation der Eingangsspannung entsteht, kompensiert werden.

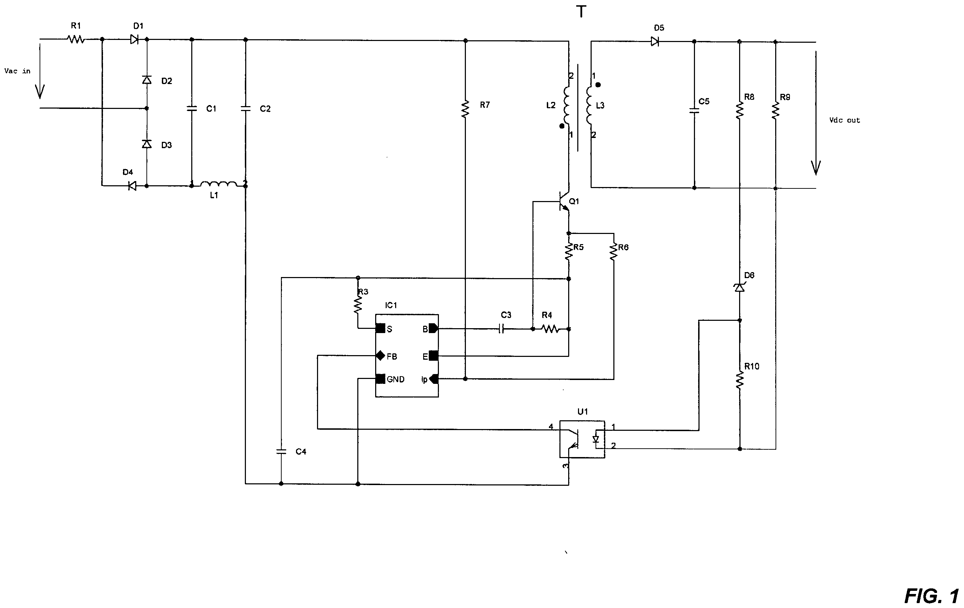

Anhand der in der beiliegenden Figur 1 dargestellten Ausgestaltung wird die Erfindung im Folgendem näher erläutert.

Figur 1 zeigt einen Schaltplan eines primär gesteuerten Schaltnetzteils mit einer Regelschaltung gemäß der vorliegenden Erfindung.

Das Schaltnetzteil wird an seinem Eingang mit der Wechselspannung (VACIN) beaufschlagt. In Europa variiert die Netzspannung zwischen 180 V und 263 V Wechselspannung, in Amerika zwischen 90 V und 130 V. Mit Hilfe des Brückengleichrichters D1 bis D4, sowie der Kondensatoren C1, C2 und der Induktivität L1 wird die Eingangsspannung von VACIN gleichgerichtet und stabilisiert und es wird sichergestellt, dass Störsignale, die Schaltnetzteil erzeugt werden, nicht ins Wechselspannungsnetz gelangen.

Die primärseitige Wicklung L2 des als Transformator ausgebildeten Übertragers T und der primärseitige Schalter Q1 sind miteinander in Serie geschaltet. An dem Anschluss 2 der primärseitigen Wicklung L2 liegt die gleichgerichtete Eingangsspannung an. Der primärseitige Schalter Q1 unterbricht den Strom, der durch die primärseitige Wicklung L2 fließt, entsprechend dem Steuersignal B der Regelschaltung IC1.

Beispielsweise kann die Abschaltdauer des primärseitigen Schalters Q1 so eingestellt werden, dass die in den Transformator T eingespeiste Energie von der Ausgangsspannung VDC OUT abhängig ist. Es wird also die übertragende Leistung so eingestellt, dass sich ein gewünschter Wert für die Ausgangsspannung VDC OUT ergibt. Um die Ausgangsspannung zu erfassen, ist der Rückkopplungszweig mit dem Widerstand R8, der Diode D6 und dem Widerstand R10 vorgesehen, der über den Optokoppler U1 ein Rückkopplungssignal an den Rückkopplungssignaleingang FB der integrierten Schaltung IC1 liefert.

Die Regelschaltung, die hier als anwenderspezifische integrierte Schaltung (ASIC) ausgeführt ist, regelt basierend auf dem an ihrem Anschluss FB anliegenden Signal den Treiberausgang B und somit die Ein- und Ausschaltzeiten des primärseitigen Schalters Q1.

Erfindungsgemäß ist der Versorgungsspannungsanschluss E der Regelschaltung IC1 über den Widerstand R5 mit dem Emitter des primärseitigen Schalters verbunden, so dass die Versorgungsspannung unmittelbar aus dem durch den Schalter Q1 fließenden primärseitigen Strom gewonnen werden kann.

Um überschüssigen Strom ableiten zu können, ist hierzu parallel geschaltet ein Abzweigwiderstand R3, der über den Schaltanschluss S mit einem im IC1 angeordneten Schalter so verbunden ist, dass der überschüssige Strom parallel zur Betriebsspannung abgeleitet wird.

Intern sind in dem ASIC IC1 Vergleichsmittel enthalten, die überwachen, ob die Betriebsspannung außerhalb eines definierten Wertes liegt, z. B. 3 V oder 5 V. Wenn die Betriebsspannung diesen Schwellenwert überschreitet, wird der interne Schalter eingeschaltet, und der überschüssige Strom wird durch den Widerstand R3 und über Masse parallel zur Betriebsspannung des ICs abgeleitet. Vorteilhafterweise wird dabei die meiste Verlustleistung nicht in dem ASIC IC1 generiert, sondern in dem Abzweigwiderstand R3, so dass die Temperaturerhöhung, die möglicherweise kritisch sein könnte, vorzugsweise außerhalb des A-SIC entsteht.

Als primärseitiger Schalter Q1 ist in der vorliegenden Ausführungsform ein Leistungsbipolartransistor vorgesehen. Selbstverständlich können alle gebräuchlichen Halbleiterleistungsschalter verwendet werden, also Bipolartranistoren, Feldeffekttransistoren oder Insulatetbipolartransistoren (IGBT).

Da das höchste Potential der Steuerschaltung niedriger ist als das zum Einschalten des Transistors Q1 erforderliche Potential, ist erfindungsgemäß zwischen dem Steueranschluss Q1 und dem Treiberausgang B des ASIC ein Kondensator C3 vorgesehen. Ein Anschluss dieses Kondensators wird mit dem Widerstand R4 an das Betriebsspannungspotential der Steuerschaltung, also an den Anschluss E des ASIC IC1 angeschlossen, so dass beim Umschalten des Treiberausgangs B der Steuerschaltung Spannungen oberhalb der Betriebsspannung der Steuerschaltung erreicht werden können. Somit kann der Leistungsschalter Q1 sicher ein- und ausgeschaltet werden.

Um den Maximalstrom in dem Transformator T begrenzen zu können, ist zwischen die Steuerschaltung und den Ausgang des Leistungsschalters, also den Emitteranschluss, bzw. im Fall eines FET den Sourceanschluss, ein Widerstand R5 geschaltet. Der Spannungsfall an diesem Widerstand ist gemäß der vorliegenden Ausführungsform über einen weiteren Widerstand R6 an den Spitzenstromerkennungsanschluss IP der Steuerschaltung geführt. Anhand des Spannungsfalls an dem Spitzenstromerkennungsanschluss IP wird durch die Steuerschaltung IC1 der Zeitpunkt bestimmt, zu dem der Leistungsschalter Q1 ausgeschaltet werden muss. Dies geschieht in an sich bekannter Weise.

Der sechste Anschluss des erfindungsgemäßen ASIC ist ein Masseanschluss GND und ist mit Masse verbunden.

Für den Start benötigt die Steuerschaltung IC1 einen kleinen Strom. In der hier gezeigten Ausführungsform erfolgt dies über einen Starterwiderstand R7, der mit der gleichgerichteten Eingangsspannung des Schaltnetzteils verbunden ist. In der gezeigten Ausführungsform wird der zweite Anschluss des Starterwiderstands R7 nicht unmittelbar mit dem Betriebsspannungseingang E verbunden, sondern mit dem Anschluss Ip zur Begrenzung des Maximalstroms. Durch eine geeignete Dimensionierung der Widerstände an diesem Anschluss, nämlich dem Starterwiderstand R7 und dem Widerstand R6, kann auf vorteilhafte Weise eine Variation des Abschaltstroms, die durch die Abschaltverzögerung des Leistungsschalters Q1 bei einer Variation der Eingangsspannung entsteht, kompensiert werden.

Die erfindungsgemäße Steuerschaltung ermöglicht es, ein Schaltnetzteil anzugeben, bei dem - im Gegensatz zu den bekannten Verfahren, bei denen eine Hilfswicklung verwendet wird oder bei denen die Steuerschaltung direkt aus der Hochspannung versorgt wird - Kosten gespart werden können und hohe Verlustleistungen, wie sie bei einer Versorgung aus der Hochspannung auftreten, vermieden werden können.

## Patentansprüche

1. Primärgesteuertes Schaltnetzteil, das einen primärseitigen Schalter (Q1) und einen Übertrager (T) mit mindestens einer primärseitigen Wicklung (L2) und mindestens einer sekundärseitigen Wicklung (L3) sowie eine Steuerschaltung (IC1) aufweist, wobei der primärseitigen Schalter (Q1) zwischen der mindestens einen primärseitigen Wicklung (L2) des Übertragers und der Steuerschaltung (IC1) elektrisch gekoppelt ist, **dadurch gekennzeichnet, dass** ein Strom, der durch die mindestens eine primärseitige Wicklung (L2) des Übertragers (T) und den geschlossenen primärseitigen Schalter (Q1) fließt, an einem Versorgungsspannungsanschluss (E) der Steuerschaltung (IC1) empfangen wird.

2. Schaltnetzteil nach Anspruch 1, wobei die Steuerschaltung (IC1) weiterhin einen ersten Parallelzweig zum Ableiten von überschüssigem primärseitigem Strom parallel zu der erzeugten Versorgungsspannung umfasst.

3. Schaltnetzteil nach Anspruch 2, wobei der erste Parallelzweig einen Schalter enthält, der in Antwort auf einen gemessenen Wert der erzeugten Versorgungsspannung angesteuert wird.

4. Schaltnetzteil nach mindestens einem der vorhergehenden Ansprüche, wobei die Steuerschaltung (IC1) weiterhin einen Steuerausgang (B) zum Ansteuern des primärseitigen Schalters (Q1) umfasst, wobei der Steuerausgang über einen Kondensator (C3) mit einem Steuereingang des primärseitigen Schalters (Q1) verbunden ist.

5. Schaltnetzteil nach mindestens einem der vorhergehenden Ansprüche, wobei die Steuerschaltung (IC1) weiterhin einen Rückkopplungssignaleingang (FB) zum Empfangen eines Rückkopplungssignals in Antwort auf die Ausgangsspannung und/oder den Ausgangsstrom des Schaltnetzteils umfasst, wobei die Steuerschaltung (IC1) Mittel zum geregelten Ansteuern des primärseitigen Schalters abhängig von dem Rückkopplungssignal aufweist.

6. Schaltnetzteil nach Anspruch 5, wobei der Rückkopplungssignaleingang (FB) über einen Optokoppler (U1) mit der Sekundärseite des Schaltnetzteils verbunden ist.

7. Schaltnetzteil nach mindestens einem der vorhergehenden Ansprüche, wobei die Steuerschaltung (IC1) weiterhin einen Spitzenstromerkennungseingang (Ip) umfasst, der zum Begrenzen des maximalen primärseitigen Stroms durch die Primärseite des Übertragers über einen zweiten Parallelzweig und den primärseitigen Schalter mit der Primärseite des Übertragers verbunden ist.

8. Schaltnetzteil nach Anspruch 7, wobei der Spitzenstromerkennungseingang (Ip) weiterhin über einen Starterwiderstand (R7) mit einer gleichgerichteten Eingangsspannung des Schaltnetzteils verbunden ist.

9. Schaltnetzteil nach mindestens einem der vorhergehenden Ansprüche, wobei der primärseitige Schalter (Q1) einen Bipolartransistor, einen Feldeffekttransistor oder einen Insulated Gate Bipolartransistor, IGBT, umfasst.

## Claims

1. Primary-controlled switching power supply comprising a primary-side switch (Q1) and a transformer (T) with at least one primary-side winding (L2) and at least one secondary-side winding (L3) and a control circuit (IC1),
wherein the primary side switch (Q1) is electrically coupled between the at least one primary-side winding (L2) of the transformer and the control circuit (IC1),
**characterized in**
**that** a current flowing through the at least one primary-side winding (L2) of the transformer (T) and the closed primary-side switch (Q1) is received at a supply voltage connection (E) of the control circuit (IC1).

2. Switching power supply according to claim 1, wherein the control circuit (IC1) further comprises a first parallel branch for diverting excess primary-side current parallel to the generated supply voltage.

3. Switching power supply according to claim 2, wherein the first parallel branch contains a switch which is operated in response to a measured value of the generated supply voltage.

4. Switching power supply according to at least one of the preceding claims, wherein the control circuit (IC1) further comprises a control output (B) for operating the primary-side switch (Q1), wherein the control output is connected via a capacitor (C3) to a control input of the primary-side switch (Q1).

5. Switching power supply according to at least one of the preceding claims, wherein the control circuit (IC1) further comprises a feedback signal input (FB) for receiving a feedback signal in response to the output voltage and/or the output current of the switching power supply, wherein the control circuit (IC1) comprises means for operating the primary-side switch in a controlled manner in response to the feedback signal.

6. Switching power supply according to claim 5, wherein the feedback signal input (FB) is connected to the secondary side of the switching power supply via an optocoupler (U1).

7. Switching power supply according to at least one of the preceding claims, wherein the control circuit (IC1) further comprises a peak current detection input (Ip) which is connected to the primary side of the transformer for limiting the maximum primary-side current through the primary side of the transformer via a second parallel branch and the primary-side switch.

8. Switching power supply according to claim 7, wherein the peak current detection input (Ip) is further connected to a rectified input voltage of the switching power supply via a starter resistor (R7).

9. Switching power supply according to at least one of the preceding claims, wherein the primary-side switch (Q1) comprises a bipolar transistor, a field effect transistor or an insulated gate bipolar transistor, IGBT.

## Revendications

1. Bloc d'alimentation à découpage à commande primaire, comprenant un commutateur primaire (Q1) et un transformateur (T) avec au moins un enroulement primaire (L2) et au moins un enroulement secondaire (L3), ainsi qu'un circuit de commande (IC1), le commutateur primaire (Q1) étant couplé électriquement entre ledit au moins un enroulement primaire (L2) du transformateur et le circuit de commande (IC1),
**caractérisé en ce qu'**un courant, qui circule à travers ledit au moins un enroulement primaire (L2) du transformateur (T) et le commutateur primaire (Q1) fermé, est reçu au niveau d'une borne de tension d'alimentation (E) du circuit de commande (IC1).

2. Bloc d'alimentation à découpage selon la revendication 1, dans lequel le circuit de commande (IC1) comprend par ailleurs, une première branche en parallèle, pour évacuer du courant primaire en excès en parallèle de la tension d'alimentation produite.

3. Bloc d'alimentation à découpage selon la revendication 2, dans lequel la première branche en parallèle renferme un commutateur, qui est commandé en réponse à une valeur mesurée de la tension d'alimentation produite.

4. Bloc d'alimentation à découpage selon l'une au moins des revendications précédentes, dans lequel le circuit de commande (IC1) comprend par ailleurs, une sortie de commande (B) destinée à assurer la commande du commutateur primaire (Q1), la sortie de commande étant reliée, par l'intermédiaire d'un condensateur (C3) à une entrée de commande du commutateur primaire (Q1).

5. Bloc d'alimentation à découpage selon l'une au moins des revendications précédentes, dans lequel le circuit de commande (IC1) comprend par ailleurs, une entrée de signal de rétroaction (FB) pour la réception d'un signal de rétroaction en réponse à la tension de sortie et/ou au courant de sortie du bloc d'alimentation à découpage, le circuit de commande (IC1) présentant des moyens pour la commande régulée du commutateur primaire, en fonction du signal de rétroaction.

6. Bloc d'alimentation à découpage selon la revendication 5, dans lequel l'entrée de signal de rétroaction (FB) est reliée par l'intermédiaire d'un optocoupleur (U1), au côté secondaire du bloc d'alimentation à découpage.

7. Bloc d'alimentation à découpage selon l'une au moins des revendications précédentes, dans lequel le circuit de commande (IC1) comprend par ailleurs, une entrée de détection de courant de crête (Ip), qui, pour limiter le courant primaire maximal à travers le côté primaire du transformateur, est reliée au côté primaire du transformateur, par l'intermédiaire d'une deuxième branche en parallèle et du commutateur primaire.

8. Bloc d'alimentation à découpage selon la revendication 7, dans lequel l'entrée de détection de courant de crête (Ip) est par ailleurs reliée, par l'intermédiaire d'une résistance de démarrage (R7), à une tension d'entrée redressée du bloc d'alimentation à découpage.

9. Bloc d'alimentation à découpage selon l'une au moins des revendications précédentes, dans lequel le commutateur primaire (Q1) comprend un transistor bipolaire, un transistor à effet de champ ou un transistor bipolaire à grille isolée IGBT (de *Insulated Gate Bipolar Transisor*).
